# EUROPEAN PATENT SPECIFICATION

(11) **EP 4 120 742 B1**
(45) Date of publication and mention of the grant of the patent: **06.05.2026**
(21) Application number: 21767384.7
(22) Date of filing: 09.03.2021
(51) Int. Cl.: H04W 40/02, H04L 45/302, H04L 45/00, H04L 45/44, H04L 45/64, H04L 47/724, H04L 45/50

(54) **PATH ESTABLISHMENT METHOD, DATA TRANSMISSION METHOD AND APPARATUS, NETWORK NODE, AND STORAGE MEDIUM**
PFADAUFBAUVERFAHREN, DATENÜBERTRAGUNGSVERFAHREN UND -VORRICHTUNG, NETZWERKKNOTEN UND SPEICHERMEDIUM
PROCÉDÉ D'ÉTABLISSEMENT DE CHEMIN, PROCÉDÉ ET APPAREIL DE TRANSMISSION DE DONNÉES, NOEUD DE RÉSEAU, ET SUPPORT DE STOCKAGE

(30) Priority: 09.03.2020 CN 202010157177
(43) Date of publication of application: 18.01.2023
(73) Proprietor: China Mobile Communication Co., Ltd Research Institute, Beijing 100053 (CN); CHINA MOBILE COMMUNICATIONS GROUP CO., LTD., Beijing 100032 (CN)
(72) Inventor: DU, Zongpeng, Beijing 100053 (CN); GENG, Liang, Beijing 100053 (CN)
(74) Representative: GPI Brevets
(86) International application number: PCT/CN2021/079772
(87) International publication number: WO 2021/180077

(56) References cited:
- EP-A1- 3 806 406
- WO-A1-2019/201299
- WO-A1-2020/010999
- CN-A- 109 218 189
- CN-A- 110 677 341
- CN-A- 110 708 243
- CN-A- 110 855 531
- CN-A- 110 870 260
- US-A1- 2019 289 508
- US-A1- 2020 044 936
- DU P LIU L GENG CHINA MOBILE Z: "Connection-oriented Path in SRv6 Network; draft-du-spring-connection-oriented-srv6-00.txt", 9 March 2020 (2020-03-09), pages 1 - 7, XP015138308, Retrieved from the Internet <URL:https://tools.ietf.org/html/draft-du-spring-connection-oriented-srv6-00> [retrieved on 20200309]

## Description

### CROSS-REFERENCE TO RELATED APPLICATION

### TECHNICAL FIELD

The present disclosure relates to the field of Internet Protocol (IP) network, in particular to a path establishment method, a path establishment device, a data transmission method, a data transmission device, a network node, and a storage medium.

### BACKGROUND

A future network is intended for a 5^{th}-Gengeration (5G) mobile communication technology. For the 5G, a bearer network needs to be adjusted accordingly, so as to be simplified, provide low delay, and achieve Software Defined Network (SDN)/Network Function Virtualization. For the development of a 5G network, a user hopes to achieve a Virtual Private Network (VPN) by means of an Internet Protocol Version 6 (IPv6) address in a simpler manner. For a Segment Routing IPv6 (SRv6) technology, using an existing IPv6 forwarding technology, a processing similar to label forwarding is implemented through extending a header field of an IPv6 message, i.e., a Segment Routing Header (SRH).
When a strict explicit path is achieved through SRv6, in the case of a large quantity of hops in the network, a Segment Identifier (SID) of each network node needs to be included in the SRH, so a packet header is relatively large. At this time, it is impossible to support a forwarding mode with a small packet header, i.e., it is impossible to establish a connection-oriented path. The document WO2019201299 discloses a method where a sink node determines the transmission path of a data packet according to a path identifier in the data packet, such that a source node transmits the data packet to a next node in the transmission path. The document WO2020010999 discloses a method for obtaining information of a forwarding path of a data packet in segment routing. The document US20200044936 discloses a method for path creation element driven dynamic setup of forwarding adjacencies and explicit path. The document XP015138308, named "Connection-oriented Path in SRv6 Network; draft-du-spring-connection-oriented-srv6-00.txt" proposes a method to support connection-oriented path in the SRv6 network.

### SUMMARY

An object of the present disclosure is to provide a path establishment methods and path establishment devices and a storage medium, so as to solve the above-mentioned problems. The present invention is defined by the subject-matter of the independent claims. Advantageous embodiments are defined in the dependent claims.

### BRIEF DESCRIPTION OF THE DRAWINGS

FIG. 1 is a schematic view showing architecture of Segment Routing (SR) in the related art;
FIG. 2 is a schematic view showing an SRv6 packet header in the related art;
FIG. 3A is a schematic view showing a forwarding procedure using a prefix SID in the related art;
FIG. 3B is a schematic view showing a forwarding procedure using an adjacency SID in the related art;
FIG. 4 is a schematic view showing an SID list for an explicit path in an SRv6 network in the related art;
FIG. 5 is a schematic view showing purposes of an SRv6 technology in the related art;
FIG. 6 is a flow chart of a path establishment method for a first network node according to one embodiment of the present disclosure;
FIG. 7 is a schematic view showing an End-type SID format;
FIGS. 8A and 8B are schematic views showing two End.X-type SID formats;
FIG. 9 is a schematic view showing a ping6 request message format according to one embodiment of the present disclosure;
FIG. 10 is a schematic view showing a ping6 reply message format according to one embodiment of the present disclosure;
FIG. 11 is a flow chart of a path establishment method for a second network node according to one embodiment of the present disclosure;
FIG. 12 is a flow chart of a path establishment method for a third network node according to one embodiment of the present disclosure;
FIG. 13 is a flow chart of a data transmission method for the first network node according to one embodiment of the present disclosure;
FIG. 14 is a flow chart of a data transmission method for the second network node according to one embodiment of the present disclosure;
FIG. 15 is a schematic view showing an SRv6 network according to one embodiment of the present disclosure;
FIG. 16 is a schematic view showing contents of a data section in a ping message according to one embodiment of the present disclosure;
FIG. 17 is a schematic view showing the change in a destination address in the ping message during the path establishment according to one embodiment of the present disclosure;
FIG. 18 is a schematic view showing the change in a destination address in a feedback message of the ping message during the path establishment according to one embodiment of the present disclosure;
FIG. 19 is a schematic view showing the change in a source address and a designation address of a packet in a message forwarding procedure according to one embodiment of the present disclosure;
FIG. 20 is a schematic view showing a path establishment device according to one embodiment of the present disclosure;
FIG. 21 is another schematic view showing the path establishment device according to one embodiment of the present disclosure;
FIG. 22 is yet another schematic view showing the path establishment device according to one embodiment of the present disclosure;
FIG. 23 is a schematic view showing a data transmission device according to one embodiment of the present disclosure;
FIG. 24 is another schematic view showing the data transmission device according to one embodiment of the present disclosure;
FIG. 25 is a schematic view showing the first network node according to one embodiment of the present disclosure;
FIG. 26 is a schematic view showing the second network node according to one embodiment of the present disclosure; and
FIG. 27 is a schematic view showing the third network node according to one embodiment of the present disclosure.

### DETAILED DESCRIPTION

The present disclosure will be described hereinafter in details in conjunction with the drawings and embodiments.

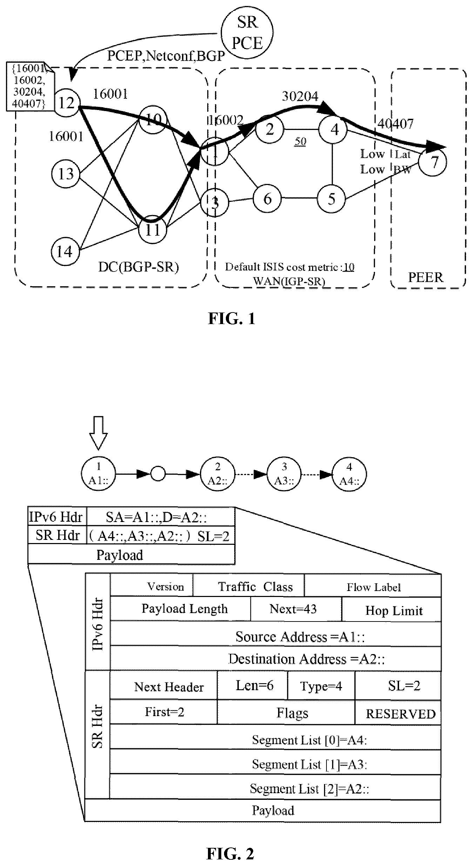

On one hand, a Traffic Engineering (TE) technology in a current network is not easy to use (e.g., Resource ReSerVation Protocol-Traffic Engineering (RSVP-TE)). Signaling is required flow by flow, a soft status of an intermediate node is required, and extensibility is poor, so it is impossible to support millions of flows in the network, i.e., it is impossible for a complicated control protocol to meet the requirement on rapid development. On the other hand, TE demands of a service flow are bandwidth, delay, jitter, etc. When there are these TE demands, it is necessary to designate a specific path for these service flows (it is presumed that it is impossible for a default shortest path to ensure Quality of Service (QoS) of these service flows). Hence, architecture of SR has been presented, as shown in FIG. 1.

The SR carries source routing information in a packet, so that the packet is forwarded along the designated path, thereby to meet the TE demands. To be specific, routing information in Multiple Protocol Label Switching (MPLS) is presented in the form of label stack (SR-MPLS), and routing information in SRv6 is presented in the form of SRH, as shown in FIG. 2.

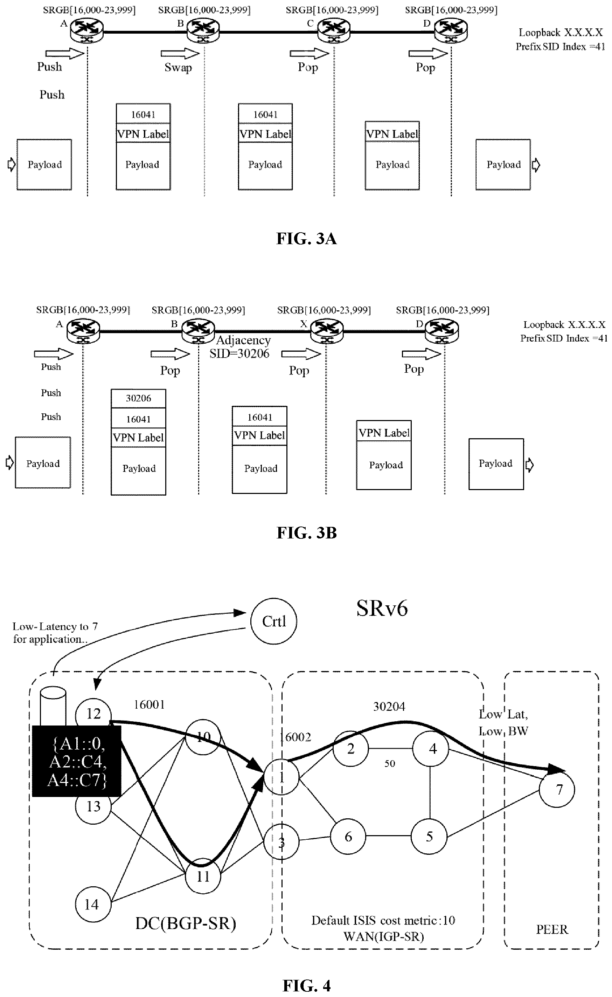

Currently, the SR-MPLS technology is relatively mature, and its advantage lies in that a forwarding mechanism of the MPLS does not change, e.g., basic processing at a forwarding plane still includes a swapping mechanism of the MPLS (as shown in FIG. 3A) or a popping mechanism (as shown in FIGS. 3A and 3B).

However, as compared with the SR-MPLS technology, the SRv6 technology is not too mature. During the forwarding in the SRv6 technology, in order to process the SRH, a forwarding procedure changes as compared with SR-MPLS technology. To be specific, the forwarding in the SRv6 technology is no longer performed merely in accordance with a destination address (DA). Instead, upon the receipt of one packet, a router (also called as network node) needs to determine whether the DA is its own SID. If yes, the router directly performs a related operation, e.g., performs a routing-related operation, and forwards the packet in accordance with an outgoing interface and a next hop corresponding to the SID. If not, a routing table is matched in accordance with the DA for the forwarding.

In the SR technology, when a strict explicit path is to be achieved, a node for each hop is designated, e.g., {16010,16001, 16002,30204,40407} in an SR-MPLS scenario as shown in FIG. 1. In this case, in an SRv6 network, when the strict explicit path is to be achieved, as shown in FIG. 4, an SID list is {A10::0, A1::0, A2::C4, A4::C7, A7::D200}, where (A1::0) is SRv6 END FUNCT corresponding to a prefix SID, and A2::C4 is SRv6 END.X FUNCT corresponding to an adjacency SID. A standard SRv6 SID has 128 bits, and when there are more hops in the network, the data packet has a large header due to the strict explicit path. In other words, when the strict explicit path is to be achieved, the SRv6 is less convenient than the SR-MPLS (an SR-MPLS SID has 32 bits).

On the other hand, the SR-MPLS network supports an MPLS forwarding plane, and these MPLS paths are connection-oriented to some extents (e.g., established through the RSVP-TE). The SRv6 network does not support the MPLS forwarding plane.

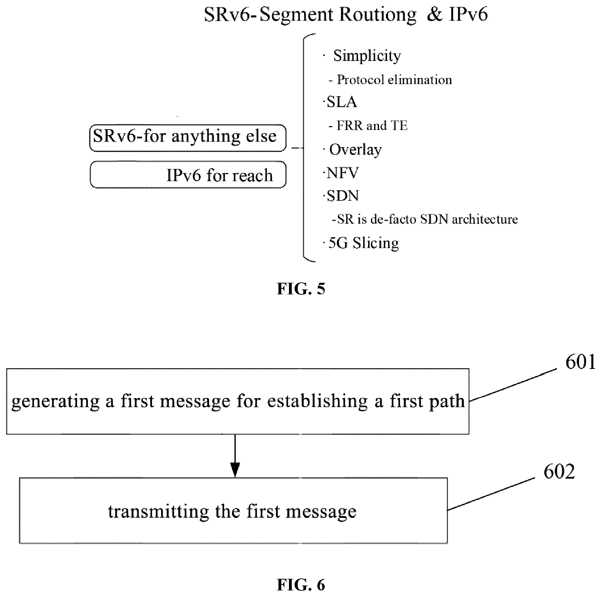

Based on the above, as shown in FIG. 5, a main object of the SRv6 technology is to simplify the network (i.e., reduce the complexity of a control protocol), so too many other technologies, e.g., the MPLS technology, are not desired to be introduced. At this time, the TE is achieved through the SID list, so the strict explicit path needs to be used. In order to achieve the strict explicit path, an SID of each hop needs to be provided, so the header has a large size. In this regard, the processing efficiency of the network node decreases, and the processing delay increases. On the other hand, in some applications, e.g., in such a scenario as Time-Sensitive Network (TSN) or a Deterministic Network (DetNet), in order to control an upper limit of the delay, an Equal-Cost Multi-Path (ECMP) mechanism is not allowed to be used, and a strict explicit path is also required. Hence, in the SRv6 network, there is an urgent need to establish a connection-oriented path for swapping the SID hop by hop so as to meet the delay control requirement of these specific services without a too long header.

Based on the above, in the embodiments of the present disclosure, in the SRv6 network, an edge node and a forwarding node in the network are enabled to support some new functions (FUNCT), and basic MPLS-based forwarding is simulated through SRv6 network programming.

This is because, essentially, MPLS and SR are both network programming languages. If a future network is an SRv6 network, in order to be compatible with some special services, the network should meet the requirement on the establishment of the connection-oriented path through a certain mechanism. Some possible scenarios will be given as follows. In a first scenario, the SRv6 technology is used in a low-latency path, so it is unnecessary to provide a too long header. In a second scenario, at the beginning of the establishment, hardware of the network node does not support a too long header.

It should be appreciated that, in the embodiments of the present disclosure, a first network node and a third network node are network edge nodes, also called as Provider Edge (PE) nodes or PE routers, e.g., provider edge nodes in a backbone network. Correspondingly, a second network node is a network forwarding node, also called as P node or P router, e.g., a provider node in the backbone network.

The present disclosure provides in some embodiments a path establishment method for a first network node which, as shown in FIG. 6, includes: Step 601 of generating a first message for establishing a first path; and Step 602 of transmitting the first message. The first message includes a first SRv6 SID of each network node of the first path, the first SRv6 SID is used to establish a connection-oriented path, and the first network node is an initial network node of the first path.

The first path is a connection-oriented path.

In actual use, the first SRv6 SID is called as an SRv6 connection-oriented control SID.

To be specific, the first SRv6 SID is used to establish the connection-oriented path on each network node (including establishing a local mapping relation between second SRv6 SIDs of the first path), so as to facilitate the establishment of the first path.

Based on the above, in some possible embodiments of the present disclosure, the establishing the connection-oriented path includes establishing the mapping relation between the second SRv6 SIDs of the first path, and the second SRv6 SID is used to forward a message for the connection-oriented path.

In actual use, the second SRv6 SID is called as an SRv6 connection-oriented path forwarding SID.

Through the first SRv6 SID, the network node supports a path establishment function. In actual use, the first SRv6 SID is defined as End.Copc (i.e., a variant of an End function of the SRv6). Correspondingly, through the second SRv6 SID, the network node supports a connection-oriented forwarding function. In actual use, the second SRv6 SID is defined as End.Xcopd (i.e., a variant of an End.X function of the SRv6).

The meaning of cop is connection-oriented path, where c represents a control plane, and d represents a data plane.

In actual use, each network node needs to advertise its own first SRv6 SID, i.e., End.Copc, and a connection-oriented path forwarding SID, i.e., End.Xcopd, so that an initial node of a certain path (e.g., the first network node) uses the first SRv6 SID to establish the connection-oriented path, and forward a packet through the SRv6 connection-oriented path forwarding SID.

The two newly-defined SIDs both carry a parameter ARGS, which follows a format definition of LOC:FUNCT:ARGS in the SRv6. During the advertisement, a relevant parameter field is set as 0.

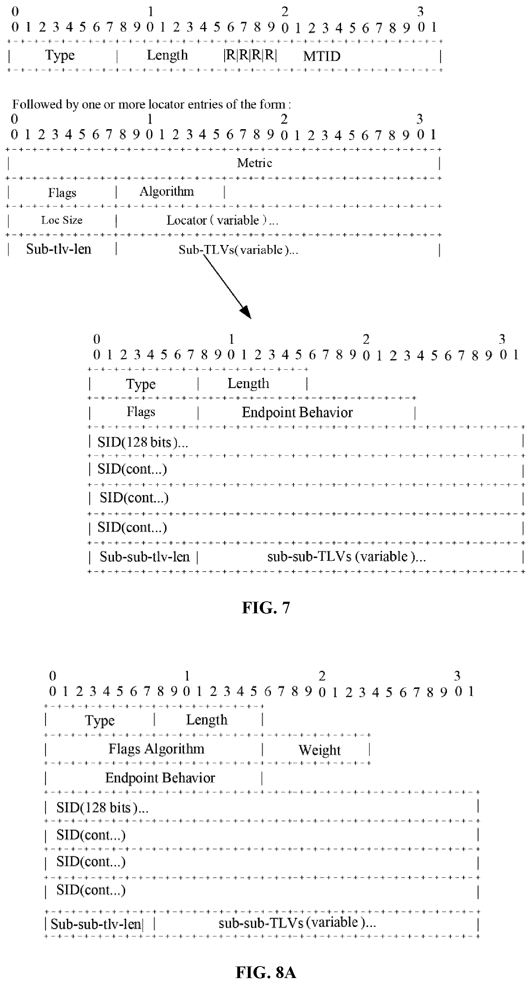

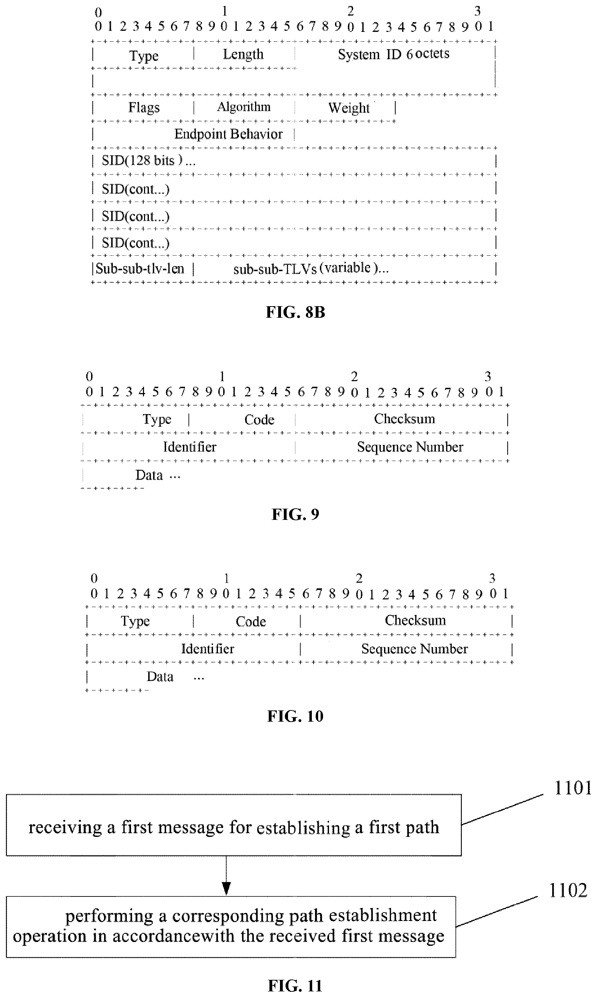

Here, in actual use, the advertisement is performed on the basis of an Interior Gateway Protocol (IGP) (e.g., an Intermediate System to Intermediate System (IS-IS) protocol), with a format AX::End.Copc:Label. At this time, Label is empty, and a FUNCT type is set as a new SRv6 SID type. FIG. 7 shows an End-type SID format. The first SRv6 SID is published in a TLV of a locator, e.g., Type is set as 100, and Endpoint behavior is set as 100. FIGS. 8A and 8B respectively show two End.X-type SID formats. The SRv6 connection-oriented path forwarding SID is published in ISIS top TLV 22. A prefix SID of the format in FIG. 8A is suitable for a Peer-to-Peer (P2P) connection scenario, e.g., Type is set as 101 and Endpoint behavior is set as 101. A prefix SID of the format in FIG. 8B is suitable for a Local Area Network (LAN) scenario, e.g., Type is set as 101, and Endpoint behavior is set as 102. The ISIS top TLV 22 is an extended IS reachability TLV for carrying some related information about ISIS adjacency of the node.

In actual use, the SRv6 SID has 128 bits, and in order to prevent the introduction of a too long SRv6 header, the first SRv6 SID of each network node of the first path is set in a data section of the message.

Based on the above, in some possible embodiments of the present disclosure, the first SRv6 SID of each network node of the first path is carried in a payload of the first message (i.e., data of the first message).

To be specific, the first SRv6 SID of each network node of the first path is set in a specific TLV of the first message.

Here, in actual use, the first message is a ping-type message, e.g., a ping6 message. The first SRv6 SID of each network node of the first path is set in data of the ping6 message as shown in FIG. 9.

The specific TLV is a newly-defined TLV, e.g., a newly-added TLV in a format where type=2 and key fields include a source address, a destination address and a path ID. The specific TLV further includes some sub-TLVs, e.g., it is used to indicate path information, and includes the first SRv6 SID of each network node of the first path, path demand information, etc.

The path demand information includes a bandwidth demand of a service flow and a delay demand.

Based on the above, in some possible embodiments of the present disclosure, the first message further carries the path demand information, and correspondingly, the path demand information is also set in the payload of the first message.

In order to establish the first path, a corresponding feedback message also needs to be received subsequent to transmitting the first message.

The method further includes: receiving a feedback message for the first message; assigning a second SRv6 SID corresponding to the first path in accordance with the feedback message, the second SRv6 SID being used to forward a message for a connection-oriented path; and generating a local mapping relation table between the second SRv6 SIDs of the first path.

The mapping relation table includes a message incoming second SRv6 SID, a message outgoing second SRv6 SID and an outgoing interface.

Here, the feedback message has contents completely identical to the payload of the first message. For example, when the first message is a ping6 message (ICMPv6 Echo request message), the feedback message is also a ping6 message (ICMPv6 Echo request message), and FIG. 9 shows the format. In other words, the ping message is transmitted by an initial node and then fed back to the initial node (a source address and a destination address of the message are both the initial node). However, depending on a function of an End.Copc function of each node in the path, the message is forwarded along a revere path in the network and then fed back to the initial node.

In another possible embodiment of the present disclosure, when the first message is a ping6 message (ICMPv6 Echo request message), the feedback message is a ping6 message (ICMPv6 Echo reply message), and FIG. 10 shows the format. In other words, the ping message is transmitted by the initial node to a last node. Upon the receipt of the ping message, the last node transmits the feedback message to the initial node. In one feedback message, the End.Copc function of each node is used, so as to achieve the function of the End.Copc of each node in the path, forward the message along a backward path in the network, and transmit the feedback message to the initial node.

Correspondingly, the present disclosure further provides in some embodiments a path establishment method for a second network node which, as shown in FIG. 11, includes: Step 1101 of receiving a first message for establishing a first path; and Step 1102 of performing a corresponding path establishment operation in accordance with the received first message. The first message includes a first SRv6 SID of each network node of the first path, the first SRv6 SID is used to establish a connection-oriented path, and the second network node is a network node in the first path other than an initial network node and a last network node (a tail network node).

Here, in actual use, the second network node receives the first message from a previous-hop network node. The previous-hop network node is the first network node or any other network forwarding node in the first path.

Step 1102 specifically includes: obtaining path information from the first message, the path information at least including the first SRv6 SID of each network node of the first path; and performing the corresponding path establishment operation in accordance with the obtained path information.

To be specific, in the first path (i.e., a forward path of the first path), the first message is forwarded to a next-hop network node of the first path. In a backward path of the first path, the following operations are performed: upon the receipt of a feedback message corresponding to the first message, determining that resources are capable of being assigned for the first path, and taking first ARG information about an SID corresponding to a destination address in the received feedback message as ARG information about a forwarding SID of the next-hop network node in the first path; generating second ARG information, modifying the SID corresponding to the destination address in the received feedback message in accordance with the second ARG information, and transmitting the modified feedback message along the backward path; and generating a local mapping relation table between second SRv6 SIDs of the first path.

In actual use, the second network node assigns one ARG in its own available ARGs as the second ARG.

When the second network node determines that its own resources are insufficient and it is impossible to assign the resources for the first path, the establishment of the path is discarded, and a path error message (PathErr) is fed back with respect to the first message. ARG information corresponding to the path error message (e.g., defined as 0001) is set in an SID corresponding to a destination address in the feedback message corresponding to the first message, and fed back to the first network node, so as to notify the first network node that the establishment of the path fails.

Similar to the local mapping relation table for the first network node, the local mapping relation table between the second SRv6 SIDs of the first path for the second network node includes a message incoming connection-oriented forwarding SID (second ARG as its parameter), a message outgoing connection-oriented forwarding SID (first ARG as its parameter), and an outgoing interface.

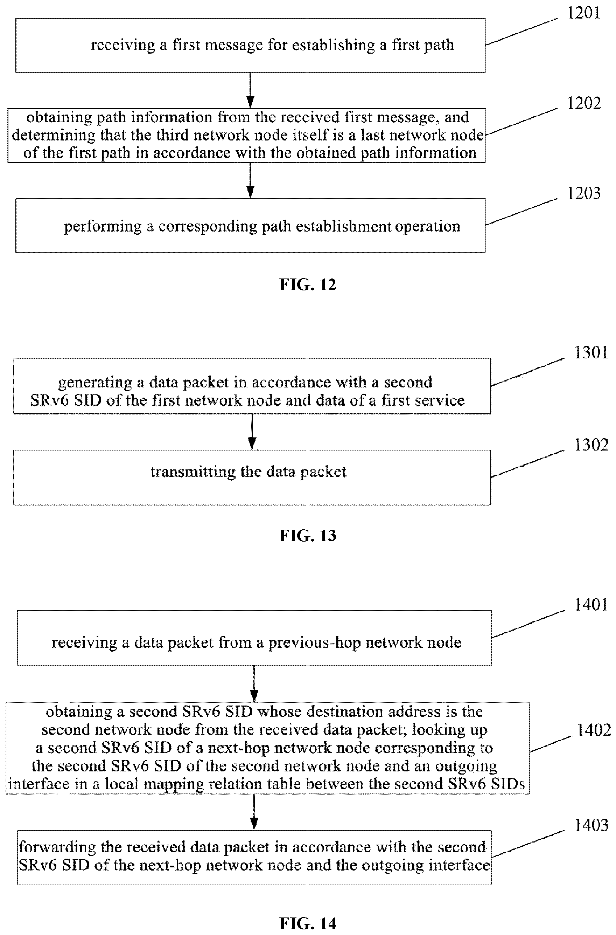

Correspondingly, the present disclosure further provides in some embodiments a path establishment method for a third network node which, as shown in FIG. 12, includes: Step 1201 of receiving a first message for establishing a first path; obtaining path information from the received first message; Step 1202 of determining that the third network node itself is a last network node of the first path in accordance with the obtained path information; and Step 1203 performing a corresponding path establishment operation. The first message includes a first SRv6 SID of each network node of the first path, the first SRv6 SID is used to establish a connection-oriented path, and the third network node is a last network node of the first path.

To be specific, third ARG information is generated, and then a feedback message corresponding to the first message is generated in accordance with the received first message and the third ARG information and is then transmitted.

Here, an ARG in an SID corresponding to a destination address in the feedback message is the third ARG information. Each of the feedback message and the first message includes a first SRv6 SID of each network node of the first path, the first SRv6 SID is used to establish a connection-oriented path on a corresponding network node, and the third network node is a last network node of the first path.

In actual use, the third network node assigns one ARG from its own available ARGs as the third ARG.

In some possible embodiments of the present disclosure, the third ARG is 0003, and it is a special label representing that the third network node is a last hop, so as to support a label popping function of a second last hop.

When the first network node has received the feedback message corresponding to the first message and locally generated the mapping relation table between the second SRv6 SIDs of the first path, it means that the first path has been established.

According to the path establishment method in the embodiments of the present disclosure, the first network node generates the first message for establishing the first path, and transmits the first message. The first message includes the first SRv6 SID of each network node of the first path, the first SRv6 SID is used to establish the connection-oriented path, and the first network node is the initial network node of the first path. The second network node performs the corresponding path establishment operation in accordance with the received first message. The third network node obtains the path information from the received first message, determines that the third network node itself is the last network node of the first path in accordance with the obtained path information, and performs the corresponding path establishment operation. In this way, a new function is supported through the network node, and the connection-oriented path is established through SRv6 network programming.

After the path has been established, a data packet is transmitted through the path.

Based on the above, the present disclosure further provides in some embodiments a data transmission method for a first network node which, as shown in FIG. 13, includes: Step 1301 of generating a data packet in accordance with a second SRv6 SID of the first network node and data of a first service; and Step 1302 of transmitting the data packet. A destination address in the data packet is a second SRv6 SID of a next-hop node of the first network node in the first path, the second SRv6 SID is used to represent that the first path has been established for the first service, the first path includes M network nodes, the data packet includes N SIDs, N is smaller than M, M and N are each an integer greater than 1, and the first network node is an initial network node of the first path.

In some possible embodiments of the present disclosure, the first network node locally obtains the second SRv6 SID of the first network node corresponding to the first service, and determines that the first path has already been established for the first service in accordance with the second SRv6 SID of the first network node.

Because the connection-oriented path has already been established, a header merely needs to carry SIDs of a part of network nodes rather than SIDs of the M network nodes, e.g., it carries SIDs of the first network node and the third network node. As a result, it is able to remarkably reduce a size of the header, thereby to remarkably increase the processing efficiency (parsing the header) of the network node, and reduce the processing delay.

Correspondingly, the present disclosure further provides in some embodiments a data transmission method for a second network node which, as shown in FIG. 14, includes: Step 1401 of receiving a data packet from a previous-hop network node; Step 1402 of obtaining a second SRv6 SID whose destination address is the second network node from the received data packet, and looking up a second SRv6 SID of a next-hop network node corresponding to the second SRv6 SID of the second network node and an outgoing interface in a local mapping relation table between the second SRv6 SIDs; and Step 1403 of forwarding the received data packet in accordance with the second SRv6 SID of the next-hop network node and the outgoing interface.

A data section of the received data packet needs to be updated into the second SRv6 SID of the next-hop network node.

The second SRv6 SID is used to represent that the first path has been established for the first service, the first path includes M network nodes, the received data packet includes N SIDs, N is smaller than M, M and N are each an integer greater than 1, and the second network node is a network node in the first path other than an initial network node and a last network node.

According to the data transmission method in the embodiments of the present disclosure, the first network node generates the data packet in accordance with the second SRv6 SID of the first network node and the data of the first service, and transmits the data packet. The destination address in the data packet is the second SRv6 SID of the next-hop node of the first network node in the first path, the second SRv6 SID is used to represent that the first path has been established for the first service, the first path includes M network nodes, the data packet includes N SIDs, N is smaller than M, M and N are each an integer greater than 1, and the first network node the an initial network node of the first path. When the new function is supported through the network node and the connection-oriented path is established through SRv6 network programming, it is unnecessary to provide the data packet with a too long packet header, so it is able to remarkably increase the processing efficiency (parsing the header) of the network node, and reduce the processing delay.

The present disclosure will be described hereinafter in more details in conjunction with a specific embodiment.

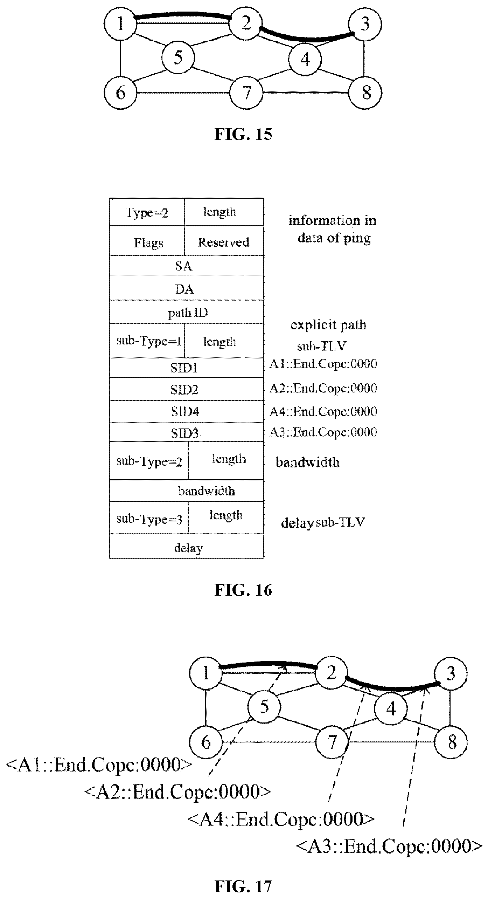

In this embodiment, for an SRv6 network in FIG. 15, a DetNet path to be established is <1, 2, 4, 3>, and this path is a low-latency path in the network.

In this case, a control plane demand is analyzed as follows.
1. An intermediate forwarding node supports a specific FUNCT for maintaining a swap mapping table, e.g., a swap entry of a node 2: incoming A2::End.XCopd:ARG2, outgoing A4::End.XCopd:ARG4, and interface XXX. After the table entry has been established, it means that a relevant forwarding path has been established on the node.
2. In a forwarding procedure, a data plane of a packet carrying a data message is forwarded, but it is necessary to establish the forwarding path before the forwarding. For example, it is triggered using a message similar to ping.

Based on the above, in this embodiment, a procedure of establishing the path includes the following steps.

Step 0: each network node advertises its own End.Copc and End.XCopd for establishing a connection-oriented path.

For example, they are advertised through an IGP in a format of AX::End.Copc:Label. At this time, Label is empty, and FUNCT type is set as a new SRv6 SID type.

After the advertisement, network programming is performed on an initial node of the path using these FUNCTs, which includes establishing the path using ping+End.Copc, encapsulating End.XCopd, and forwarding the message.

Step 1: when a node 1 wants to establish a dedicated low-latency path <1, 2, 4, 3> for a new service, a message (e.g., ping) is generated. In an establishment mode, a source/destination address of a header is <A1::End.Copc:0000, A1::End.Copc:0000>.

A TLV is added in data information of the ping message in a format of type=2, and the TLV further includes some sub-TLVs, as shown in FIG. 16, so as to indicate path information, a bandwidth demand of a service flow and a delay demand.

A1::End.Copc:0000 matches a local SID list of the node 1, and then performs the path establishment operation in accordance with 0000, i.e., the node 1 determines that it is capable of assigning resources for the low-latency path, i.e., determines that the resources are sufficient, reads information in the ping message, finds its own SID and a next SID, replaces DA in the ping message with the next SID as A2::End.Copc:0000, and then transmits the message.

Step 2: upon the receipt of the message, a node 2 matches the SID with its own SID, and then performs the path establishment operation in accordance with 0000, i.e., the node 1 determines that it is capable of assigning resources for the low-latency path, i.e., determines that the resources are sufficient, reads information in the ping message, finds its own SID and a next SID, replaces DA in the ping message with the next SID as A4::End.Copc:0000, and then transmits the message.

Step 3: upon the receipt of the message, a node 4 matches the SID with its own SID, and then performs the path establishment operation in accordance with 0000, i.e., the node 1 determines that it is capable of assigning resources for the low-latency path, i.e., determines that the resources are sufficient, reads information in the ping message, finds its own SID and a next SID, replaces DA in the ping message with the next SID as A3::End.Copc:0000, and then transmits the message.

In Steps 1 to 3, FIG. 17 shows a change in the DA in the ping message.

Step 4: upon the receipt of the message, a node 3 matches the SID with its own SID, and then performs the path establishment operation in accordance with a special label parameter 0000, i.e., the node 3 determines that it is capable of assigning resources for the low-latency path, i.e., determines that the resources are sufficient, reads information in the ping message, finds its own SID, determines that it is a last SID in the path, i.e., DA in a last ping, assigns a new A3::End.XCopd:0003 for the path, finds an SID of a previous-hop node, replaces DA in the ping message with the found SID as A4::End.Copc:0003, generates a feedback message, and then transmits the ping message.

Step 5: upon the receipt of the message, i.e., the feedback message, the node 4 matches the SID with its own SID, and then performs the path establishment operation in accordance with 0003, i.e., the node 4 reads information in the ping message, finds its own SID and a previous SID (a previous SID in a forward path), assigns a new A4::End.XCopd:0017 for the path, replaces DA in the ping message with the previous SID as A2::End.Copc:0017, and transmits the ping message. The node 4 establishes a new SID mapping table, which includes incoming A4::End.XCopd:0017, swap A3::End.XCopd:0003, and an outgoing interface which is an A4-to-A3 interface matching a Service Level Agreement (SLA).

Step 6: upon the receipt of the message, i.e., the feedback message, the node 2 matches the SID with its own SID, and then performs the path establishment operation in accordance with 0017, i.e., the node 2 reads information in the ping message, finds its own SID and a previous SID, assigns a new A2::End.XCopd:0045 for the path, replaces DA in the ping message with the previous SID as A1::End.Copc:0045, and transmits the ping message. The node 2 establishes a new SID mapping table, which includes incoming A2::End.XCopd:0045, swap A4::End.XCopd:0017, and an outgoing interface which is an A2-to-A4 interface matching the SLA.

Step 7: upon the receipt of the message, i.e., the feedback message, the node 1 matches the SID with its own SID, and then performs the path establishment operation in accordance with 0045, i.e., the node 1 reads information in the ping message, finds its own SID and SA, determines that it matches a first SID, and assigns a new A1::End.XCopd:0098 for the path. The node 1 establishes a new SID mapping table, which includes incoming A1::End.XCopd:0098, swap A2::End.XCopd:0045, and an outgoing interface which is an A1-to-A2 interface matching the SLA.

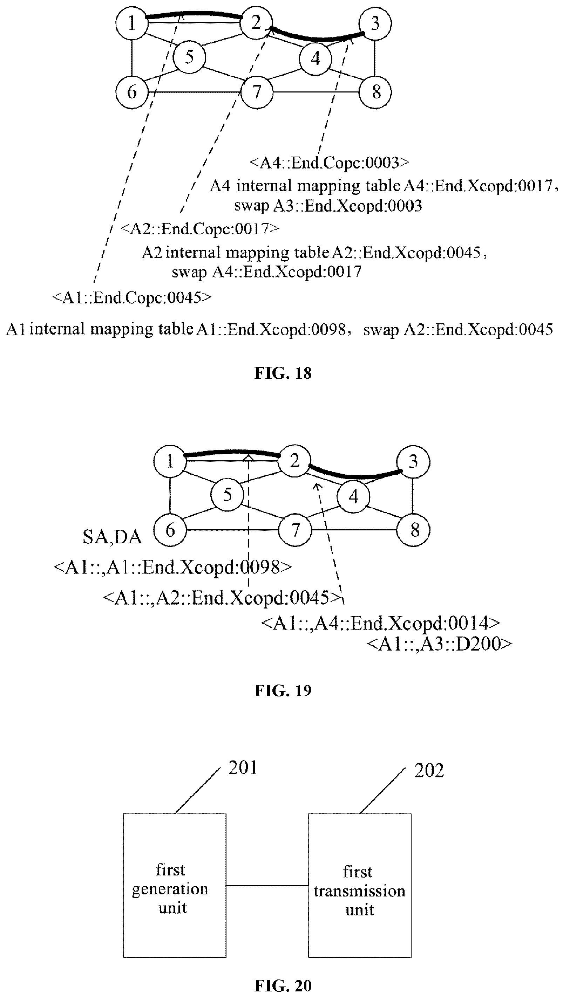

In Steps 4 to 7, FIG. 18 shows a change in the data in the ping message.

After the establishment of the path, the data may be forwarded.

A forwarding procedure includes the following steps.

Step 1: at the node 1, a packet1 is established, an SID list is <A1::End.XCopd:ARG1, A3::D200>, n interface corresponding to A1::End.XCopd:0098 is inquired in a local SID mapping table, A2::End.XCopd: 0045 is written into DA of the pacet1, and then the packet1 is forwarded.

The packet1 merely needs two SIDs <A1::End.XCopd:0098, A3::D200>, i.e., its header merely includes the two SIDs. A1::End.XCopd:0098 is written into the DA, and swap is performed at each node. When a popping operation is triggered by a last node or a second last node, SL-1 is performed so as to process the SID A3::D200. A3::D200 is a service SID on the node 3, e.g., END.DT4 FUNCT defined in SRv6.

Step 2: upon the receipt of the packet1, the node 2 matches the SID with its own SID, inquires an interface corresponding to A2::End.XCopd:0045 in the local SID mapping table, writes A4::End.XCopd:0017 into the DA of the packet1, and forwards the packet1.

Step 3: upon the receipt of the packet1, the node 4 matches the SID with its own SID, inquires an interface corresponding to A4::End.XCopd:0017 in the local SID mapping table, determines that the node is a last second hop, subtracts a Segment Length (SL) by 1, writes A3::D200 into the DA, and forwards the packet1.

Step 4: upon the receipt of the message, the node 3 matches the SID with its own SID, processes the packet1 in accordance with A3::D200, and transmits the packet1.

FIG. 19 shows changes in a source address (SA) and the data in the packet1 forwarding procedure.

Depending on a relevant SRv6 forwarding mechanism, all DetNet traffic needs to encapsulate the four SIDs <A1::C12, A2::C24, A4::C43, A3::D200>.

However, in the embodiments of the present disclosure, the DetNet traffic merely needs to encapsulate two SIDs <A1::End.XCopd:ARG1, A3::D200>, so it is able to remarkably reduce a length of the header .

Based on the above, in the embodiments of the present disclosure, a distributed implementation mechanism for establishing the connection-oriented path (SID swapping) is defined in the SRv6 network. In this process, two new SRv6 FUNCTs are defined, where End.Copc is used to establish the path in accordance with SID list information and path demand information in the payload, and End.XCopd is used to forward the data.

Each network node in the path needs to determine whether it carries a label or it wants to trigger a certain function in accordance with a specific label tag (ARG), e.g., 0000 indicates a path establishment function. For a specific path establishment function, the operations performed by the initial node, the intermediate node and the last node are different. When the label is carried, it indicates a return path by default. At this time, a label starts to be assigned, and an SID mapping table is established. During the establishment of the mapping table, the operations performed by the initial node, the intermediate node and the last node are different.

The path establishment function of the node is implemented through the following codes:

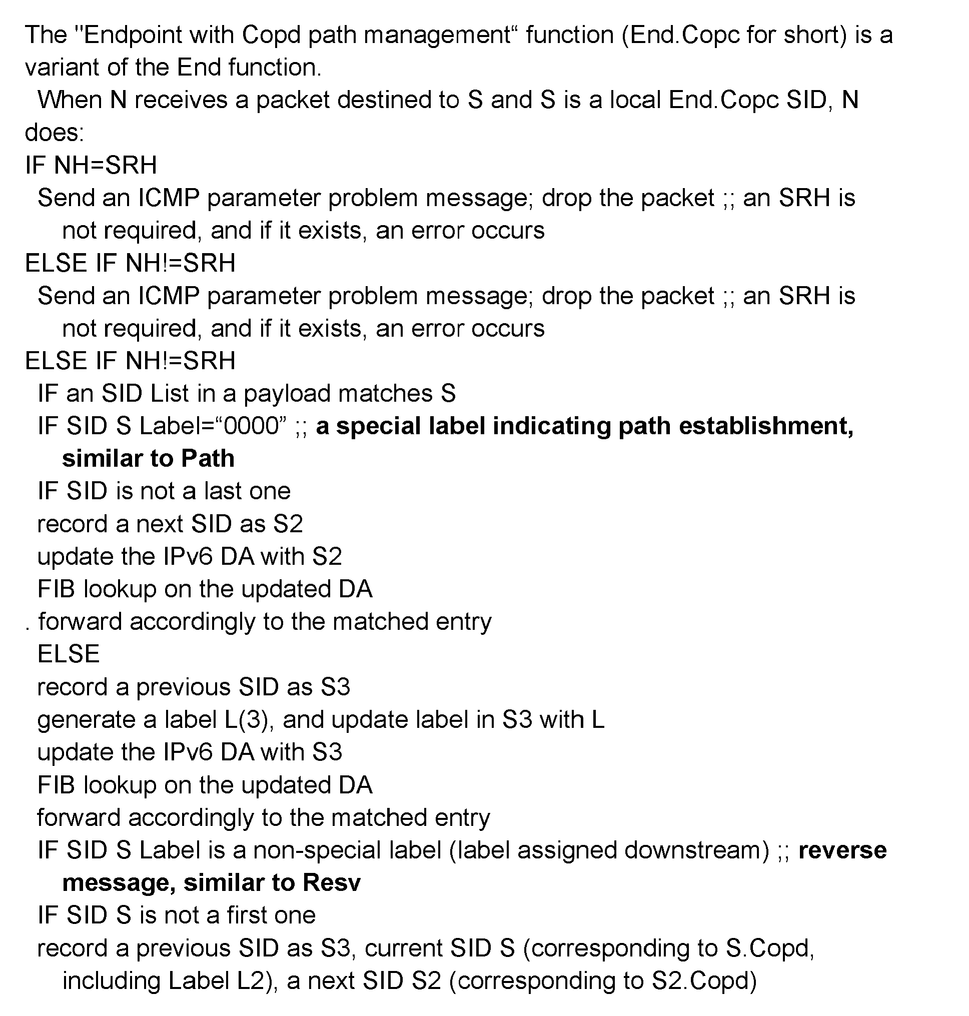

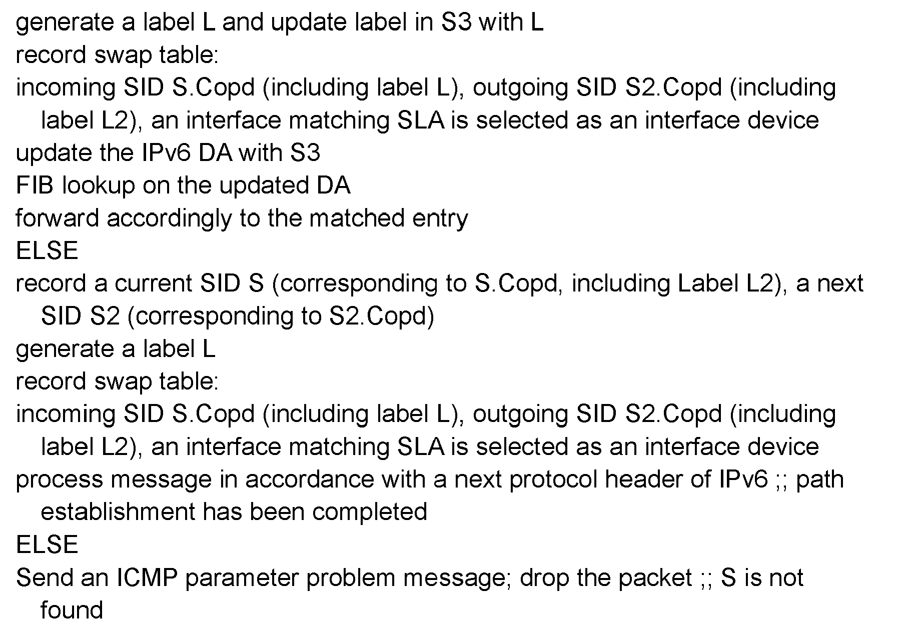

The message forwarding operation of the node is implemented through the following codes.

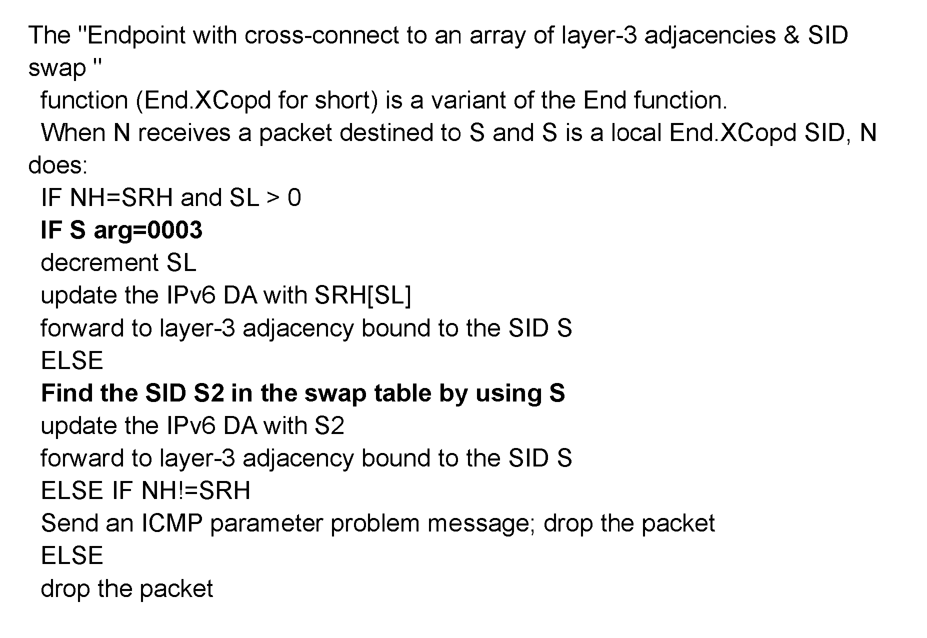

According to the embodiments of the present disclosure, in the SRv6 network, for the traffic where the connection-oriented path is demanded, the path may be established through the method in the embodiments of the present disclosure, so as to forward the data. For the other traffic in the network, the data is forwarded using a conventional SRv6 forwarding mechanism. The two procedures are independent of each other.

In order to implement the above-mentioned method, the present disclosure further provides in some embodiments a path establishment device arranged at a first network node which, as shown in FIG. 20, includes: a first generation unit 201 configured to generate a first message for establishing a first path; and a first transmission unit 202 configured to transmit the first message. The first message includes a first SRv6 SID of each network node of the first path, the first SRv6 SID is used to establish a connection-oriented path, and the first network node is an initial network node of the first path.

In some possible embodiments of the present disclosure, the path establishment device further includes: a third reception unit configured to receive a feedback message for the first message; and a third establishment unit configured to assign a second SRv6 SID corresponding to the first path in accordance with the feedback message, the second SRv6 SID being used to forward a message for a connection-oriented path, and generate a local mapping relation table between the second SRv6 SIDs of the first path.

In actual use, the first generation unit 201 and the third establishment unit may be implemented through a processor in the path establishment device, and the first transmission unit 202 and the third reception unit may be implemented through a communication interface in the path establishment device.

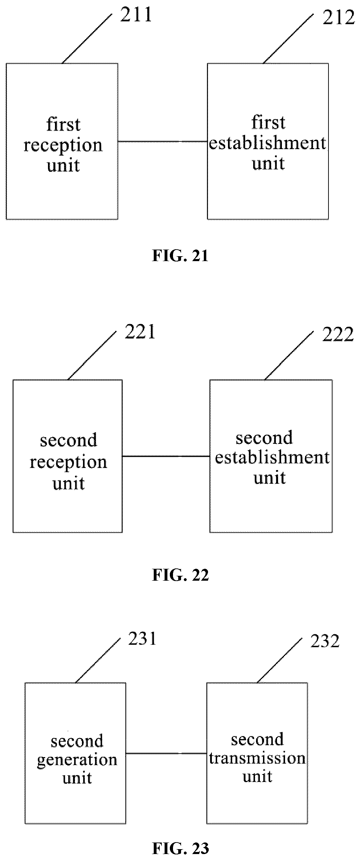

In order to implement the above-mentioned method for the second network side device, the present disclosure further provides in some embodiments a path establishment device arranged at the second network node which, as shown in FIG. 21, includes: a first reception unit 211 configured to receive a first message for establishing a first path; and a first establishment unit 212 configured to perform a corresponding path establishment operation in accordance with the received first message. The first message includes a first SRv6 SID of each network node of the first path, the first SRv6 SID is used to establish a connection-oriented path, and the second network node is a network node in the first path other than an initial network node and a last network node.

In some possible embodiments of the present disclosure, the first establishment unit 212 is configured to: obtain path information from the first message, the path information at least including the first SRv6 SID of each network node of the first path; and perform the corresponding path establishment operation in accordance with the obtained path information.

In some possible embodiments of the present disclosure, the performing the corresponding path establishment operation includes: in the first path, determining that resources are capable of being assigned for the first path, and forwarding the first message to a next-hop network node in the first path; and in a backward path of the first path, performing the following operations: upon the receipt of a feedback message corresponding to the first message, taking first ARG information about an SID corresponding to a destination address in the received feedback message as ARG information about a forwarding SID of the next-hop network node in the first path; generating second ARG information, modifying the SID corresponding to the destination address in the received feedback message in accordance with the second ARG information, and transmitting the modified feedback message; and generating a local mapping relation table between second SRv6 SIDs of the first path.

In actual use, the first reception unit 211 and the third reception unit may be implemented through a communication interface in the path establishment device, and the first establishment unit 212 may be implemented by a processor in the path establishment device.

In order to implement the above-mentioned method for the third network node, the present disclosure further provides in some embodiments a path establishment device arranged at the third network node which, as shown in FIG. 22, includes: a second reception unit 221 configured to receive a first message for establishing a first path; and a second establishment unit 222 configured to obtain path information from the received first message, determine that the third network node itself is a last network node of the first path in accordance with the obtained path information, and perform a corresponding path establishment operation. The first message includes a first SRv6 SID of each network node of the first path, the first SRv6 SID is used to establish a connection-oriented path, and the third network node is a last network node of the first path.

In some possible embodiments of the present disclosure, the second establishment unit 222 is configured to: generate a feedback message of the first message in accordance with the received first message and third ARG information, ARG in an SID corresponding to a destination address in the feedback message being the third ARG information; and transmit the feedback message, the feedback message including the first SRv6 SID of each network node of the first path. The first message includes a first SRv6 SID of each network node of the first path, the first SRv6 SID is used to establish a connection-oriented path, and the third network node is a last network node of the first path.

The second reception unit 221 may be implemented through a communication interface in the path establishment device, and the second establishment unit 222 may be implemented through a processor in the path establishment device.

It should be appreciated that, during the establishment of the path, the above-mentioned path establishment device is merely described on the basis of the above-mentioned program modules. In actual use, the above processings may be completed through different program modules according to the practical need, i.e., an internal structure of the device may be divided into different program modules to complete all or a part of the described processings. In addition, the path establishment device in the embodiments of the present disclosure belongs to a same concept as the path establishment method, and the specific implementation of the path establishment device may refer to that of the path establishment method, which will thus not be particularly defined herein.

In order to implement the data transmission method for the first network node, the present disclosure further provides in some embodiments a data transmission device arranged at the first network node which, as shown in FIG. 23, includes: a second generation unit 231 configured to generate a data packet in accordance with a second SRv6 SID of the first network node and data of a first service; and a second transmission unit 232 configured to transmit the data packet. A destination address in the data packet is a second SRv6 SID of a next-hop node of the first network node in the first path, the second SRv6 SID is used to represent that the first path has been established for the first service, the first path includes M network nodes, the data packet includes N SIDs, N is smaller than M, M and N are each an integer greater than 1, and the first network node is an initial network node of the first path.

In some possible embodiments of the present disclosure, the data transmission device further includes a determination unit configured to: locally obtain the second SRv6 SID of the first network node corresponding to the first service; and determine that the first path has already been established for the first service in accordance with the second SRv6 SID of the first network node.

In actual use, the second transmission unit 232 may be implemented through a communication interface in the data transmission device, and the second generation unit 231 and the determination unit may be implemented through a processor in the data transmission device.

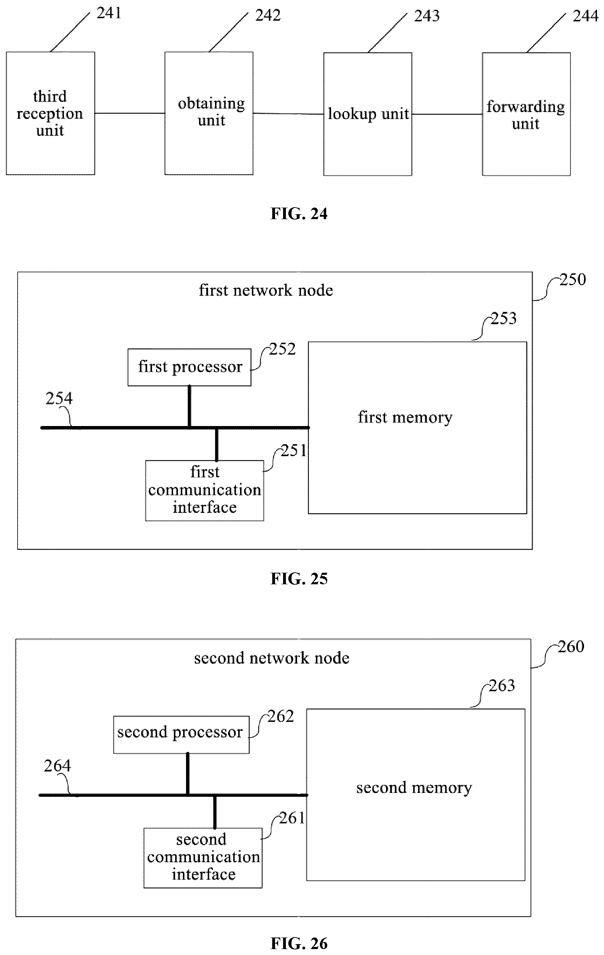

In order to implement the data transmission method for the second network node, the present disclosure further provides in some embodiments a data transmission device arranged at the second network node which, as shown in FIG. 24, includes: a third reception unit 241 configured to receive a data packet from a previous-hop network node; an obtaining unit 242 configured to obtain a second SRv6 SID whose destination address is the second network node from the received data packet; and a lookup unit 243 configured to look up a second SRv6 SID of a next-hop network node corresponding to the second SRv6 SID of the second network node and an outgoing interface in a local mapping relation table between the second SRv6 SIDs; and a forwarding unit 244 configured to forward the received data packet in accordance with the second SRv6 SID of the next-hop network node and the outgoing interface. The second SRv6 SID is used to represent that the first path has been established for the first service, the first path includes M network nodes, the received data packet includes N SIDs, N is smaller than M, M and N are each an integer greater than 1, and the second network node is a network node in the first path other than an initial network node and a last network node.

In actual use, the third reception unit 241 may be implemented through a communication interface in the data transmission device, and the obtaining unit 242, the lookup unit 243 and the forwarding unit 244 may be implemented through a processor in the data transmission device.

It should be appreciated that, during the data transmission, the above-mentioned data transmission device is merely described on the basis of the above-mentioned program modules. In actual use, the above processings may be completed through different program modules according to the practical need, i.e., an internal structure of the device may be divided into different program modules to complete all or a part of the described processings. In addition, the data transmission device in the embodiments of the present disclosure belongs to a same concept as the data transmission method, and the specific implementation of the data transmission device may refer to that of the data transmission method, which will thus not be particularly defined herein.

Based on the hardware implementation of the above-mentioned program modules and in order to implement the method for the first network node, the present disclosure further provides in some embodiments a first network node 250 which, as shown in FIG. 25, includes: a first communication interface 251 for swapping information with the other network node; and a first processor 252 coupled to the first communication interface 251 to exchange information with the other network node, and configured to, when executing a computer program, implement the above-mentioned method for the first network node. The computer program is stored in a first memory 253.

To be specific, in a path establishment procedure, the first processor 252 is configured to generate a first message for establishing a first path, and the first communication interface 251 is configured to transmit the first message. The first message includes a first SRv6 SID of each network node of the first path, and the first SRv6 SID is used to establish a connection-oriented path.

In some possible embodiments of the present disclosure, the first communication interface 251 is further configured to receive a feedback message for the first message. The first processor 252 is configured to: assign a second SRv6 SID corresponding to the first path in accordance with the feedback message, the second SRv6 SID being used to forward a message for a connection-oriented path; and generate a local mapping relation table between the second SRv6 SIDs of the first path.

In a data transmission procedure, the first processor 252 is configured to generate a data packet in accordance with a second SRv6 SID of the first network node and data of a first service. The first communication interface 251 is configured to transmit the data packet. A destination address in the data packet is a second SRv6 SID of a next-hop node of the first network node in the first path, the second SRv6 SID is used to represent that the first path has been established for the first service, the first path includes M network nodes, the data packet includes N SIDs, N is smaller than M, M and N are each an integer greater than 1, and the first network node is an initial network node of the first path.

In some possible embodiments of the present disclosure, the first processor 252 is further configured to: locally obtain the second SRv6 SID of the first network node corresponding to the first service; and determine that the first path has already been established for the first service in accordance with the second SRv6 SID of the first network node.

It should be appreciated that, a specific processing procedure of the first processor 252 may refer to that mentioned in the method.

Of course, in actual use, components of the first network node 250 are coupled to each other through a bus system 254. It should be appreciated that, the bus system 254 is configured to achieve the coupling and communication among the components. Apart from a data bus, the bus system 254 further includes a power source bus, a control bus and a status signal bus. For clarification, all these buses in FIG. 25 may be collectively called as bus system 254.

The first memory 253 in the embodiments of the present disclosure is configured to store therein various data to support the operation of the first network node 250. Examples of the data include any computer program operated on the first network node 250.

The above-mentioned method may be applied to, or implemented by, the first processor 252. The first processor 252 may be an integrated circuit having a signal processing capability. During the implementation, the steps of the above-mentioned method may be completed through an integrated logic circuit of hardware in the first processor 252 or instructions in the form of software. The first processor 252 may be a general-purpose processor, a digital signal processor (DSP), or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a storage medium in the first memory 253, and the first processor 252 may read information in the first memory 253 so as to implement the steps of the method in conjunction with the hardware.

Illustratively, the first network node 250 may be implemented through one or more of an Application Specific Integrated Circuits (ASIC), a DSP, a Programmable Logic Device (PLD), a Complex Programmable Logic Device (CPLD), a Field-Programmable Gate Array (FPGA), a general purpose processor, a controller, a Micro Controller Unit (MCU), a microprocessor or any other electronic element, so as to implement the above-mentioned methods.

Based on the hardware implementation of the above-mentioned program modules and in order to implement the method for the second network node, the present disclosure further provides in some embodiments a second network node 260 which, as shown in FIG. 26, includes: a first communication interface 261 for swapping information with the other network node; and a second processor 262 coupled to the second communication interface 261 to exchange information with the other network node, and configured to, when executing a computer program, implement the above-mentioned method for the second network node. The computer program is stored in the second processor 262.

To be specific, in a path establishment procedure, the second communication interface 261 is configured to receive a first message for establishing a first path, and the second processor 262 is configured to perform a corresponding path establishment operation in accordance with the received first message. The first message includes a first SRv6 SID of each network node of the first path, the first SRv6 SID is used to establish a connection-oriented path, and the second network node is a network node in the first path other than an initial network node and a last network node.

In some possible embodiments of the present disclosure, the second processor 262 is configured to: obtain path information from the first message, the path information at least including the first SRv6 SID of each network node of the first path; and perform the corresponding path establishment operation in accordance with the obtained path information.

In some possible embodiments of the present disclosure, the performing the corresponding path establishment operation includes: in the first path, determining, by the second processor 262, that resources are capable of being assigned for the first path, and forwarding the first message to a next-hop network node in the first path; and in a backward path of the first path, performing, by the second processor 262, the following operations: upon the receipt of a feedback message corresponding to the first message, taking first ARG information about an SID corresponding to a destination address in the received feedback message as ARG information about a forwarding SID of the next-hop network node in the first path; generating second ARG information, modifying the SID corresponding to the destination address in the received feedback message in accordance with the second ARG information, and transmitting the modified feedback message; and generating a local mapping relation table between second SRv6 SIDs of the first path.

In a data transmission procedure, the second communication interface 261 is configured to receive a data packet from a previous-hop network node, and the received data packet belongs to a first service. The second processor 262 is configured to obtain a second SRv6 SID whose destination address is the second network node from the received data packet, look up a second SRv6 SID of a next-hop network node corresponding to the second SRv6 SID of the second network node and an outgoing interface in a local mapping relation table between the second SRv6 SIDs, and forward the received data packet in accordance with the second SRv6 SID of the next-hop network node and the outgoing interface. The second SRv6 SID is used to represent that the first path has been established for the first service, the first path includes M network nodes, the received data packet includes N SIDs, N is smaller than M, M and N are each an integer greater than 1, and the second network node is a network node in the first path other than an initial network node and a last network node.

It should be appreciated that, specific processing procedures of the second processor 262 and the second communication interface 261 may refer to the above-mentioned methods.

Of course, in actual use, components of the second network node 260 are coupled to each other through a bus system 264. It should be appreciated that, the bus system 264 is configured to achieve the coupling and communication among the components. Apart from a data bus, the bus system 264 further includes a power source bus, a control bus and a status signal bus. For clarification, all these buses in FIG. 26 may be collectively called as bus system 264.

The second memory 263 in the embodiments of the present disclosure is configured to store therein various data to support the operation of the second network node 260. Examples of the data include any computer program operated on the second network node 260.

The above-mentioned method may be applied to, or implemented by, the second processor 262. The second processor 262 may be an integrated circuit having a signal processing capability. During the implementation, the steps of the above-mentioned method may be completed through an integrated logic circuit of hardware in the second processor 262 or instructions in the form of software. The second processor 262 may be a general-purpose processor, a DSP, or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a storage medium in the second memory 263, and the second processor 262 may read information in the second memory 263 so as to implement the steps of the method in conjunction with the hardware.

Illustratively, the second network node 260 may be implemented through one or more of an ASIC, a DSP, a PLD, a CPLD, an FPGA, a general purpose processor, a controller, an MCU, a microprocessor or any other electronic element, so as to implement the above-mentioned methods.

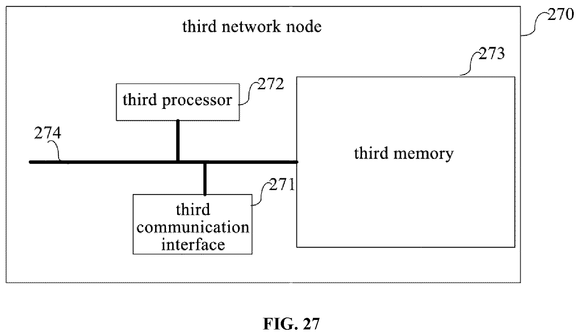

Based on the hardware implementation of the above-mentioned program modules and in order to implement the method for the third network node, the present disclosure further provides in some embodiments a third network node 270 which, as shown in FIG. 27, includes: a third communication interface 271 for swapping information with the other network node; and a third processor 272 coupled to the third communication interface 271 to exchange information with the other network node, and configured to, when executing a computer program, implement the above-mentioned method for the third network node. The computer program is stored in a third memory 273.

To be specific, the third communication interface 271 is configured to receive a first message for establishing a first path. The third processor 272 is configured to: obtain path information from the received first message; determine that the third network node itself is a last network node of the first path in accordance with the obtained path information; and perform a corresponding path establishment operation. The first message includes a first SRv6 SID of each network node of the first path, the first SRv6 SID is used to establish a connection-oriented path, and the third network node is a last network node of the first path.

In some possible embodiments of the present disclosure, the third processor 272 is configured to generate third ARG information and generate a feedback message of the first message in accordance with the received first message and the third ARG information, and ARG in an SID corresponding to a destination address in the feedback message is the third ARG information. The third communication interface 271 is further configured to transmit the feedback message, and the feedback message includes the first SRv6 SID of each network node of the first path.

Of course, in actual use, components of the third network node 270 are coupled to each other through a bus system 274. It should be appreciated that, the bus system 274 is configured to achieve the coupling and communication among the components. Apart from a data bus, the bus system 274 further includes a power source bus, a control bus and a status signal bus. For clarification, all these buses in FIG. 27 may be collectively called as bus system 274.

The third memory 273 in the embodiments of the present disclosure is configured to store therein various data to support the operation of the third network node 270. Examples of the data include any computer program operated on the third network node 270.

The above-mentioned method may be applied to, or implemented by, the third processor 272. The third processor 272 may be an integrated circuit having a signal processing capability. During the implementation, the steps of the above-mentioned method may be completed through an integrated logic circuit of hardware in the third processor 272 or instructions in the form of software. The third processor 272 may be a general-purpose processor, a digital signal processor (DSP), or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a storage medium in the third memory 273, and the third processor 272 may read information in the third memory 273 so as to implement the steps of the method in conjunction with the hardware.

Illustratively, the third network node 270 may be implemented through one or more of an ASIC, a DSP, a PLD, a CPLD, an FPGA, a general purpose processor, a controller, an MCU, a microprocessor or any other electronic element, so as to implement the above-mentioned methods.

It should be appreciated that, the memory (the first memory 253, the second memory 263 and the third memory 273) may include a volatile memory, a nonvolatile memory or both. The nonvolatile memory may be a Read-Only Memory (ROM), a programmable ROM (PROM), an erasable PROM (EPROM), an electrically EPROM (EEPROM), a ferromagnetic random Access Memory (FRAM), a flash memory, a magnetic surface memory, an optic disc, or a Compact Disc Read-Only Memory (CD-ROM). The magnetic surface memory may be a magnetic disc or magnetic tape memory. The volatile memory may be a Random Access Memory (RAM) which serves as an external high-speed cache. Illustratively but not restrictively, the RAM may include static RAM (SRAM), synchronous static RAM (SSRAM), dynamic RAM (DRAM), synchronous DRAM (SDRAM), double data rate SDRAM (DDRSDRAM), enhanced SDRAM (ESDRAM), synchronous link DRAM (SLDRAM) or direct Rambus RAM (DRRAM). The memory intends to include, but not limited to, the above-mentioned and any other appropriate memories.

The present disclosure further provides in some embodiments a storage medium, i.e., a storage medium, particularly a computer-readable storage medium. For example, it includes a first memory 253 storing therein a computer program, and the computer program is executed by the first processor 252 of the first network node 250 so as to implement the steps of the above-mentioned method for the first network node. For another example, it includes the second memory 263 storing therein a computer program, and the computer program is executed by the second processor 262 of the second network node 260 so as to implement the steps of the above-mentioned method for the second network node. For yet another example, it includes the third memory 273 storing therein a computer program, and the computer program is executed by the third processor 272 of the third network node 270 so as to implement the steps of the above-mentioned method for the second network node. The computer-readable storage medium may be FRAM, ROM, PROM, EPROM, EEPROM, flash memory, magnetic surface memory, optic disc or CD-ROM.

It should be appreciated that, such words as "first" and "second" are merely used to differentiate similar objects rather than to represent any specific order.

In addition, in the case of no conflict, the technical solutions in the embodiments of the present disclosure may be combined in any appropriate manner.

The above embodiments are for illustrative purposes only, but the present disclosure is not limited thereto.

## Claims

1. A path establishment method performed by a first network node, the path establishment method comprising:
generating (601) a first message for establishing a first path; and
transmitting (602) the first message to a next-hop network node, wherein the first message comprises a first Segment Routing IPv6, SRv6, Segment Identifier, SID, of each network node of the first path, the first SRv6 SID is used to establish a connection-oriented path, and the first network node is an initial network node of the first path, wherein the first path is a connection-oriented path,
the path establishment method being **characterized by** further comprising:
receiving a feedback message from the next-hop network node for the first message;
assigning a second SRv6 SID corresponding to the first path in accordance with the feedback message, the second SRv6 SID being used to forward a message for a connection-oriented path; and
generating a local mapping relation table between the second SRv6 SID of the first path.

2. The path establishment method according to claim 1, wherein the establishing the connection-oriented path comprises establishing a mapping relation between second SRv6 SIDs of the first path, and the second SRv6 SID is used to forward a message for the connection-oriented path.

3. The path establishment method according to claim 1, wherein the first SRv6 SID of each network node of the first path is carried in a payload of the first message; or
wherein the first SRv6 SID of each network node of the first path is carried in a specific Type Length Value, TLV, of a payload of the first message,
wherein the first message is a ping message, and the specific TLV is a newly-defined TLV.

4. The path establishment method according to any one of claims 1 to 3, wherein the mapping relation table comprises a message incoming second SRv6 SID, a message outgoing second SRv6 SID, and an outgoing interface.

5. A path establishment method performed by a second network node, the path establishment method comprising:
receiving (1101) a first message for establishing a first path from a previous hop network node; and
performing (1102) a corresponding path establishment operation in accordance with the received first message, wherein the first message comprises a first SRv6 SID of each network node of the first path, the first SRv6 SID is used to establish a connection-oriented path, and the second network node is a network node in the first path other than an initial network node and a last network node, wherein the first path is a connection-oriented path,
the path establishment method being **characterized in that**
wherein the performing the corresponding path establishment operation comprises: in the first path, determining that resources are capable of being assigned for the first path, and forwarding the first message to a next-hop network node in the first path; and in a backward path of the first path, performing the following operations: upon the receipt of a feedback message from the next-hop network node corresponding to the first message, assigning a second SRv6 SID corresponding to the first path in accordance with the received feedback message, taking first Argument, ARG, information about a SID corresponding to a destination address in the received feedback message as ARG information about a forwarding SID of the next-hop network node in the first path; generating second ARG information, modifying the SID corresponding to the destination address in the received feedback message in accordance with the second ARG information, and transmitting the modified feedback message to the previous hop network node;
and generating a local mapping relation table between the second SRv6 SID of the first path.

6. The path establishment method according to claim 5, wherein the first SRv6 SID of each network node of the first path is carried in a payload of the first message.

7. The path establishment method according to claim 5, wherein subsequent to the generating the local mapping relation table between second SRv6 SID of the first path, a data transmission method performed by the second network node is executed, the data transmission method comprising:
receiving (1401) a data packet from the previous-hop network node;
obtaining (1402) a second SRv6 SID whose destination address is the second network node from the received data packet;
looking up (1402) a second SRv6 SID of the next-hop network node corresponding to the second SRv6 SID of the second network node and an outgoing interface in the local mapping relation table between the second SRv6 SIDs; and
forwarding (1403) the received data packet in accordance with the second SRv6 SID of the next-hop network node and the outgoing interface, wherein the second SRv6 SID is used to represent that the first path has been established for a
first service, the first path comprises M network nodes, the received data packet comprises N SIDs, N is smaller than M, M and N are each an integer greater than 1, and the second network node is a network node in the first path other than an initial network node and a last network node.

8. A path establishment device arranged at a first network node, comprising:
a first generation unit (201) configured to generate a first message for establishing a first path; and a first transmission unit (202) configured to transmit the first message to a next-hop network node,
wherein the first message comprises a first SRv6 SID of each network node of the first path, the first SRv6 SID is used to establish a connection-oriented path, and the first network node is an initial network node of the first path, wherein the first path is a connection-oriented path,
the path establishment device being **characterized by** configured further to:
receive a feedback message for the first message from the next-hop network node;
assign a second SRv6 SID corresponding to the first path in accordance with the feedback message, the second SRv6 SID being used to forward a message for a connection-oriented path; and
generate a local mapping relation table between the second SRv6 SID of the first path.

9. A path establishment device arranged at a second network node, comprising: a first reception unit (211) configured to receive a first message for establishing a first path from a previous hop network node;
and a first establishment unit (212) configured to perform a corresponding path establishment operation in accordance with the received first message, wherein the first message comprises a first SRv6 SID of each network node of the first path, the first SRv6 SID is used to establish a connection-oriented path, and the second network node is a network node in the first path other than an initial network node and a last network node, wherein the first path is a connection-oriented path,
the path establishment device (212) being **characterized in that**
wherein the first establishment unit is further configured to: in the first path, determine that resources are capable of being assigned for the first path, and forward the first message to a next-hop network node in the first path; and in a backward path of the first path, perform the following operations: upon the receipt of a feedback message corresponding to the first message from the next-hop network node, assign a second SRv6 SID corresponding to the first path in accordance with the received feedback message; take first Argument, ARG, information about a SID corresponding to a destination address in the received feedback message as ARG information about a forwarding SID of the next-hop network node in the first path; generate second ARG information, modify the SID corresponding to the destination address in the received feedback message in accordance with the second ARG information, and transmit the modified feedback message to the previous hop network node; and generate a local mapping relation table between the second SRv6 SID of the first path.

10. The data transmission device according to claim 9, further comprising: a third reception unit (241) configured to receive a data packet from the previous-hop network node; an obtaining unit (242) configured to obtain a second SRv6 SID whose destination address is the second network node from the received data packet; and a lookup unit (243) configured to look up a second SRv6 SID of the next-hop network node corresponding to the second SRv6 SID of the second network node and an outgoing interface in the local mapping relation table between the second SRv6 SIDs; and a forwarding unit (244) configured to forward the received data packet in accordance with the second SRv6 SID of the next-hop network node and the outgoing interface, wherein the second SRv6 SID is used to represent that the first path has been established for a first service, the first path comprises M network nodes, the received data packet comprises N SIDs, N is smaller than M, M and N are each an integer greater than 1.

11. A storage medium storing therein a computer program, wherein the computer program is executed by a processor so as to implement the steps of the path establishment method according to any one of claims 1 to 4, the steps of the path establishment method according to any one of claims 5 to 7.

## Patentansprüche

1. Verfahren zum Aufbau eines Pfades, das von einem ersten Netzwerkknoten ausgeführt wird, wobei das Verfahren zum Aufbau eines Pfades umfasst:
Erzeugen (601) einer ersten Nachricht zum Aufbau eines ersten Pfades; und
Senden (602) der ersten Nachricht an einen Netzwerkknoten des nächsten Hops, wobei die erste Nachricht eine erste Segment-Routing-IPv6-Segmentkennung (SRv6-SID) jedes Netzwercknotens des ersten Pfades umfasst, wobei der erste SRv6-SID zum Aufbau eines verbindungsorientierten Pfades verwendet wird und der erste Netzwerkknoten ein Anfangs-Netzwerkknoten des ersten Pfades ist, wobei der erste Pfad ein verbindungsorientierter Pfad ist,
wobei das Verfahren zum Aufbau eines Pfades **dadurch gekennzeichnet ist, dass** es ferner umfasst:
für die erste Nachricht Empfangen einer Rückmeldungsnachricht vom Netzwerkknoten des nächsten Hops;
Zuweisen einer zweiten SRv6-SID, die dem ersten Pfad entspricht, gemäß der Rückmeldungsnachricht, wobei die zweite SRv6-SID verwendet wird, um eine Nachricht für einen verbindungsorientierten Pfad weiterzuleiten; und
Erstellen einer lokalen Zuordnungstabelle zwischen der zweiten SRv6-SID des ersten Pfads.

2. Verfahren zum Aufbau eines Pfades nach Anspruch 1, wobei der Aufbau des verbindungsorientierten Pfades das Herstellen einer Zuordnungsbeziehung zwischen zweiten SRv6-SIDs des ersten Pfades umfasst und die zweite SRv6-SID zum Weiterleiten einer Nachricht für den verbindungsorientierten Pfad verwendet wird.

3. Verfahren zum Aufbau eines Pfades nach Anspruch 1, wobei die erste SRv6-SID jedes Netzwerkknotens des ersten Pfades in einer Nutzlast der ersten Nachricht übertragen wird; oder
wobei die erste SRv6-SID jedes Netzwerkknotens des ersten Pfades in einem spezifischen Typ-Länge-Wert (TLV) einer Nutzlast der ersten Nachricht übertragen wird,
wobei die erste Nachricht eine Ping-Nachricht ist und der spezifische TLV ein neu definierter TLV ist.

4. Verfahren zum Aufbau eines Pfades nach einem der Ansprüche 1 bis 3,
bei dem die Zuordnungstabelle eine eingehende zweite SRv6-SID, eine ausgehende zweite SRv6-SID und eine ausgehende Schnittstelle umfasst.

5. Verfahren zum Aufbau eines Pfades, das von einem zweiten Netzwerkknoten ausgeführt wird, wobei das Verfahren zum Aufbau eines Pfades umfasst:
Empfangen (1101) einer ersten Nachricht zum Aufbau eines ersten Pfades von einem Netzwerkknoten des vorherigen Hops; und
Durchführen (1102) eines entsprechenden Pfadaufbauvorgangs gemäß der empfangenen ersten Nachricht, wobei die erste Nachricht eine erste SRv6-SID jedes Netzwerkknotens des ersten Pfades umfasst, die erste SRv6-SID zum Aufbau eines verbindungsorientierten Pfades verwendet wird, und der zweite Netzwerkknoten ein Netzwerkknoten im ersten Pfad ist, der weder ein Anfangsknoten noch ein Endknoten ist, wobei der erste Pfad ein verbindungsorientierter Pfad ist,
wobei das Verfahren zur Pfadaufbau **dadurch gekennzeichnet ist, dass**
wobei das Ausführen des entsprechenden Pfadaufbauvorgangs umfasst: im ersten Pfad zu ermitteln, dass Ressourcen für den ersten Pfad zugewiesen werden können, und die erste Nachricht an einen Netzwerkknoten des nächsten Hops im ersten Pfad weiterzuleiten; und in einem Rückwärtspfad des ersten Pfads die folgenden Vorgänge auszuführen: bei Empfang einer Rückmeldungsnachricht von dem Netzwerkknoten des nächsten Hops, die der ersten Nachricht entspricht, Zuweisen einer zweiten SRv6-SID, die dem ersten Pfad entspricht, gemäß der empfangenen Rückmeldungsnachricht, Verwenden von ersten Argument-Informationen, ARG über eine SID, die einer Zieladresse in der empfangenen Rückmeldungsnachricht entspricht, als ARG-Informationen über eine Weiterleitungs-SID des Netzwerkknotens des nächsten Hops im ersten Pfad; Erzeugen von zweiten ARG-Informationen, Modifizieren der der Zieladresse in der der empfangenen Rückmeldungsnachricht entsprechenden SID gemäß den zweiten ARG-Informationen und Senden der modifizierten Rückmeldungsnachricht an den Netzwerkknoten des vorherigen Hops; und Erzeugen einer lokalen Zuordnungstabelle zwischen der zweiten SRv6-SID des ersten Pfades.

6. Verfahren zum Aufbau eines Pfades nach Anspruch 5, bei dem die erste SRv6-SID jedes Netzwerkknotens des ersten Pfades in einer Nutzlast der ersten Nachricht übertragen wird.

7. Verfahren zum Aufbau eines Pfades nach Anspruch 5, bei dem im Anschluss an das Erstellen der lokalen Zuordnungstabelle zwischen der zweiten SRv6-SID des ersten Pfades ein vom zweiten Netzwerkknoten durchgeführtes Datenübertragungsverfahren ausgeführt wird, wobei das Datenübertragungsverfahren umfasst:
Empfangen (1401) eines Datenpakets vom Netzwerkknoten des vorherigen Hops;
Ermitteln (1402) einer zweiten SRv6-SID, deren Zieladresse der zweite Netzwerkknoten ist, aus dem empfangenen Datenpaket;
Nachschlagen (1402) einer zweiten SRv6-SID des Netzwercknotens des nächsten Hops, die der zweiten SRv6-SID des zweiten Netzwerkknotens entspricht, sowie einer ausgehenden Schnittstelle in der lokalen Zuordnungstabelle zwischen den zweiten SRv6-SIDs; und
Weiterleiten (1403) des empfangenen Datenpakets gemäß der zweiten SRv6-SID des Netzwerkknotens des nächsten Hops und der ausgehenden Schnittstelle, wobei die zweite SRv6-SID verwendet wird, um darzustellen, dass der erste Pfad für einen ersten Dienst eingerichtet wurde, der erste Pfad M Netzwerkknoten umfasst, das empfangene Datenpaket N SIDs umfasst, N kleiner als M ist, M und N jeweils eine ganze Zahl größer als 1 sind, und der zweite Netzwerkknoten ein Netzwerkknoten im ersten Pfad ist, der weder ein Anfangsknoten noch ein Endknoten ist.

8. An einem ersten Netzwerkknoten angeordnete Pfadaufbauvorrichtung, umfassend:
eine erste Erzeugungseinheit (201), die konfiguriert ist, um eine erste Nachricht zum Aufbau eines ersten Pfades zu erzeugen; und eine erste Übertragungseinheit (202), die konfiguriert ist, um die erste Nachricht an einen Netzwerkknoten des nächsten Hops zu übertragen,
wobei die erste Nachricht eine erste SRv6-SID jedes Netzwerkknotens des ersten Pfades umfasst, die erste SRv6-SID zum Aufbau eines verbindungsorientierten Pfades verwendet wird und der erste Netzwerkknoten ein Anfangsknoten des ersten Pfades ist, wobei der erste Pfad ein verbindungsorientierter Pfad ist,
wobei die Pfadaufbauvorrichtung **dadurch gekennzeichnet ist, dass** sie ferner konfiguriert ist, um:
eine Rückmeldungsnachricht für die erste Nachricht von dem Netzwerkknoten des nächsten Hops zu empfangen;
gemäß der Rückmeldungsnachricht eine dem ersten Pfad entsprechende zweite SRv6-SID zuzuweisen, wobei die zweite SRv6-SID verwendet wird, um eine Nachricht für einen verbindungsorientierten Pfad weiterzuleiten; und
eine lokale Zuordnungstabelle zwischen der zweiten SRv6-SID des ersten Pfads zu erzeugen.

9. An einem zweiten Netzwerkknoten angeordnete Pfadaufbauvorrichtung, umfassend: eine erste Empfangseinheit (211), die konfiguriert ist, um eine erste Nachricht zum Aufbau eines ersten Pfades von einem Netzwerkknoten des vorherigen Hops zu empfangen;
und eine erste Aufbaueinheit (212), die konfiguriert ist, um einen entsprechenden Pfadaufbauvorgang gemäß der empfangenen ersten Nachricht durchzuführen, wobei die erste Nachricht eine erste SRv6-SID jedes Netzwerkknotens des ersten Pfades umfasst, die erste SRv6-SID zum Aufbau eines verbindungsorientierten Pfades verwendet wird, und der zweite Netzwerkknoten ein Netzwerkknoten im ersten Pfad ist, der weder ein Anfangsknoten noch ein Endknoten ist, wobei der erste Pfad ein verbindungsorientierter Pfad ist,
wobei die Pfadaufbauvorrichtung (212) **dadurch gekennzeichnet ist, dass** die erste Aufbaueinheit ferner konfiguriert ist, um: im ersten Pfad festzustellen, dass Ressourcen für den ersten Pfad zugewiesen werden können, und die erste Nachricht an einen Netzwerkknoten des nächsten Hops im ersten Pfad weiterzuleiten; und in einem Rückwärtspfad des ersten Pfads die folgenden Vorgänge auszuführen: bei Empfang einer der ersten Nachricht entsprechenden Rückmeldungsnachricht vom Netzwercknoten des nächsten Hops, Zuweisen einer dem ersten Pfad entsprechenden zweiten SRv6-SID gemäß der empfangenen Rückmeldungsnachricht; Verwenden von ersten Argument-, ARG, -Informationen über eine einer Zieladresse in der empfangenen Rückmeldungsnachricht entsprechenden SID als ARG-Informationen über eine Weiterleitungs-SID des Netzwerkknotens des nächsten Hops im ersten Pfad; Erzeugen von zweiten ARG-Informationen, Modifizieren der der Zieladresse in der empfangenen Rückmeldungsnachricht entsprechenden SID gemäß der zweiten ARG-Informationen und Senden der modifizierten Rückmeldungsnachricht an den Netzwerkknoten des vorherigen Hops; und Erzeugen einer lokalen Zuordnungstabelle zwischen der zweiten SRv6-SID des ersten Pfades.

10. Datenübertragungsvorrichtung nach Anspruch 9, ferner umfassend: eine dritte Empfangseinheit (241), die konfiguriert ist, um ein Datenpaket von dem Netzwerkknoten des vorherigen Hops zu empfangen; eine Erfassungseinheit (242), die konfiguriert ist, um eine zweite SRv6-SID, deren Zieladresse der zweite Netzwerkknoten ist, aus dem empfangenen Datenpaket zu erfassen; und eine Nachschlageinheit (243), die konfiguriert ist, um eine zweite SRv6-SID des Netzwerkknotens des nächsten Hops, die der zweiten SRv6-SID des zweiten Netzwerkknotens entspricht, sowie eine ausgehende Schnittstelle in der lokalen Zuordnungstabelle zwischen den zweiten SRv6-SIDs nachzuschlagen; und
eine Weiterleitungseinheit (244), die konfiguriert ist, um das empfangene Datenpaket gemäß der zweiten SRv6-SID des Netzwerkknotens des nächsten Hops und der ausgehenden Schnittstelle weiterzuleiten, wobei die zweite SRv6-SID verwendet wird, um darzustellen, dass der erste Pfad für einen ersten Dienst eingerichtet wurde, der erste Pfad M Netzwerkknoten umfasst, das empfangene Datenpaket N SIDs umfasst, N kleiner als M ist, und M und N jeweils eine ganze Zahl größer als 1 sind.

11. Speichermedium, auf dem ein Computerprogramm gespeichert ist, wobei das Computerprogramm von einem Prozessor ausgeführt wird, um die Schritte des Pfadaufbauverfahrens nach einem der Ansprüche 1 bis 4 sowie die Schritte des Pfadaufbauverfahrens nach einem der Ansprüche 5 bis 7 zu implementieren.

## Revendications

1. Procédé d'établissement de trajet exécuté par un premier nœud de réseau, le procédé d'établissement de trajet comprenant les étapes prévoyant de :
générer (601) un premier message pour établir un premier trajet ; et
transmettre (602) le premier message à un nœud de réseau de saut suivant,
dans lequel le premier message comprend un premier identifiant de segment, SID, de routage de segment IPv6, SRv6, de chaque nœud de réseau du premier trajet, le premier SID de SRv6 est utilisé pour établir un trajet orienté connexion, et le premier nœud de réseau est un nœud de réseau initial du premier trajet, dans lequel le premier trajet est un trajet orienté connexion,
le procédé d'établissement de trajet étant **caractérisé en ce qu'**il comprend en outre les étapes prévoyant de
recevoir un message de rétroaction en provenance du nœud de réseau de saut suivant pour le premier message ;
attribuer un second SID de SRv6 correspondant au premier trajet conformément au message de rétroaction, le second SID de SRv6 étant utilisé pour transmettre un message pour un trajet orienté connexion ; et
générer une table de relation de mise en correspondance locale entre les seconds SID de SRv6 du premier trajet.

2. Procédé d'établissement de trajet selon la revendication 1, dans lequel l'établissement du trajet orienté connexion comprend l'établissement d'une relation de mise en correspondance entre des seconds SID de SRv6 du premier trajet, et le second SID de SRv6 est utilisé pour transmettre un message pour le trajet orienté connexion.

3. Procédé d'établissement de trajet selon la revendication 1, dans lequel le premier SID de SRv6 de chaque nœud de réseau du premier trajet est transporté dans une charge utile du premier message ; ou
dans lequel le premier SID de SRv6 de chaque nœud de réseau du premier trajet est transporté dans une valeur de longueur de type spécifique, TLV, d'une charge utile du premier message,
dans lequel le premier message est un message ping, et la TLV spécifique est une TLV nouvellement définie.

4. Procédé d'établissement de trajet selon l'une quelconque des revendications 1 à 3, dans lequel la table de relation de mise en correspondance comprend un second SID de SRv6 entrant de message, un second SID de SRv6 sortant de message et une interface sortante.

5. Procédé d'établissement de trajet exécuté par un deuxième nœud de réseau, le procédé d'établissement de trajet comprenant les étapes prévoyant de :
recevoir (1101) un premier message pour établir un premier trajet à partir d'un nœud de réseau de saut précédent ; et
effectuer (1102) une opération d'établissement de trajet correspondant conformément au premier message reçu, dans lequel le premier message comprend un premier SID de SRv6 de chaque nœud de réseau du premier trajet, le premier SID de SRv6 est utilisé pour établir un trajet orienté connexion, et le deuxième nœud de réseau est un nœud de réseau dans le premier trajet autre qu'un nœud de réseau initial et un dernier nœud de réseau, dans lequel le premier trajet est un trajet orienté connexion,
le procédé d'établissement de trajet étant **caractérisé en ce que**
l'exécution de l'opération d'établissement de trajet correspondante comprend les étapes prévoyant de : dans le premier trajet, déterminer que des ressources peuvent être attribuées pour le premier trajet, et transmettre le premier message à un nœud de réseau de saut suivant dans le premier trajet ; et dans un trajet de retour du premier trajet, l'exécution des opérations suivantes : à la réception d'un message de rétroaction en provenance du nœud de réseau de saut suivant correspondant au premier message, attribuer un second SID de SRv6 correspondant au premier trajet conformément au message de rétroaction reçu, prendre des premières informations d'argument, ARG, sur un SID correspondant à une adresse de destination dans le message de rétroaction reçu en tant qu'informations ARG sur un SID de transmission du nœud de réseau de saut suivant dans le premier trajet ; générer des secondes informations ARG, modifier le SID correspondant à l'adresse de destination dans le message de rétroaction reçu conformément aux secondes informations ARG, et transmettre le message de rétroaction modifié au nœud de réseau de saut précédent ; et générer une table de relation de mise en correspondance locale entre les seconds SID de SRv6 du premier trajet.

6. Procédé d'établissement de trajet selon la revendication 5, dans lequel le premier SID de SRv6 de chaque nœud de réseau du premier trajet est transporté dans une charge utile du premier message.

7. Procédé d'établissement de trajet selon la revendication 5, dans lequel, après la génération de la table de relation de mise en correspondance locale entre des seconds SID de SRv6 du premier trajet, un procédé de transmission de données exécuté par le second nœud de réseau est exécuté, le procédé de transmission de données comprenant les étapes prévoyant de :
recevoir (1401) un paquet de données en provenance du nœud de réseau de saut précédent ;
obtenir (1402) un second SID de SRv6 dont l'adresse de destination est le deuxième nœud de réseau à partir du paquet de données reçu ;
rechercher (1402) un second SID de SRv6 du nœud de réseau de saut suivant correspondant au second SID de SRv6 du deuxième nœud de réseau et une interface sortante dans la table de relation de mise en correspondance local entre les deuxièmes SID de SRv6 ; et
transmettre (1403) le paquet de données reçu conformément au second SID de SRv6 du nœud de réseau de saut suivant et à l'interface sortante, dans lequel le second SID de SRv6 est utilisé pour représenter que le premier trajet a été établi pour un premier service, le premier trajet comprend M nœuds de réseau, le paquet de données reçu comprend N SID, N est plus petit que M, M et N sont chacun un entier supérieur à 1, et le second nœud de réseau est un nœud de réseau dans le premier trajet autre qu'un nœud de réseau initial et un dernier nœud de réseau.

8. Dispositif d'établissement de trajet agencé au niveau d'un premier nœud de réseau, comprenant :
une première unité de génération (201) configurée pour générer un premier message pour établir un premier trajet ; et
une première unité de transmission (202) configurée pour transmettre le premier message à un nœud de réseau de saut suivant,
dans lequel le premier message comprend un premier SID de SRv6, de chaque nœud de réseau du premier trajet, le premier SID de SRv6 est utilisé pour établir un trajet orienté connexion, et le premier nœud de réseau est un nœud de réseau initial du premier trajet, dans lequel le premier trajet est un trajet orienté connexion,
le dispositif d'établissement de trajet étant **caractérisé en ce qu'**il est configuré en outre pour :
recevoir un message de rétroaction pour le premier message en provenance du nœud de réseau de saut suivant ;
attribuer un second SID de SRv6 correspondant au premier trajet conformément au message de rétroaction, le second SID de SRv6 étant utilisé pour transmettre un message pour un trajet orienté connexion ; et
générer une table de relation de mise en correspondance locale entre les seconds SID de SRv6 du premier trajet.

9. Dispositif d'établissement de trajet agencé au niveau d'un deuxième nœud de réseau, comprenant :
une première unité de réception (211) configurée pour recevoir un premier message pour établir un premier trajet à partir d'un nœud de réseau de saut précédent ; et
une première unité d'établissement (212) configurée pour effectuer (212) une opération d'établissement de trajet correspondant conformément au premier message reçu, dans lequel le premier message comprend un premier SID de SRv6 de chaque nœud de réseau du premier trajet, le premier SID de SRv6 est utilisé pour établir un trajet orienté connexion, et le deuxième nœud de réseau est un nœud de réseau dans le premier trajet autre qu'un nœud de réseau initial et un dernier nœud de réseau, dans lequel le premier trajet est un trajet orienté connexion,
le dispositif d'établissement de trajet (212) étant **caractérisé en ce que**
la première unité d'établissement est en outre configurée pour : dans le premier trajet, déterminer que des ressources peuvent être attribuées pour le premier trajet, et transmettre le premier message à un nœud de réseau de saut suivant dans le premier trajet ; et dans un trajet de retour du premier trajet, exécuter les opérations suivantes : à la réception d'un message de rétroaction en provenance du nœud de réseau de saut suivant, message correspondant au premier trajet, attribuer un second SID de SRv6 correspondant au premier trajet conformément au message de rétroaction reçu, prendre des premières informations d'argument, ARG, sur un SID correspondant à une adresse de destination dans le message de rétroaction reçu en tant qu'informations ARG sur un SID de transmission du nœud de réseau de saut suivant dans le premier trajet ; générer des secondes informations ARG, modifier le SID correspondant à l'adresse de destination dans le message de rétroaction reçu conformément aux secondes informations ARG, et transmettre le message de rétroaction modifié au nœud de réseau de saut précédent ; et générer une table de relation de mise en correspondance locale entre les seconds SID de SRv6 du premier trajet.

10. Dispositif de transmission de données selon la revendication 9, comprenant en outre :
une troisième unité de réception (241) configurée pour recevoir un paquet de données en provenance du nœud de réseau de saut précédent ;
une unité d'obtention (242) configurée pour obtenir un second SID de SRv6 dont l'adresse de destination est le deuxième nœud de réseau à partir du paquet de données reçu ; et
une unité de recherche (243) configurée pour rechercher un second SID de SRv6 du nœud de réseau de saut suivant correspondant au second SID de SRv6 du deuxième nœud de réseau et une interface sortante dans la table de relation de mise en correspondance local entre les deuxièmes SID de SRv6 ; et
une unité de transmission (244) configurée pour transmettre le paquet de données reçu conformément au second SID de SRv6 du nœud de réseau de saut suivant et à l'interface sortante, dans lequel le second SID de SRv6 est utilisé pour représenter que le premier trajet a été établi pour un premier service, le premier trajet comprend M nœuds de réseau, le paquet de données reçu comprend N SID, N est plus petit que M, M et N sont chacun un entier supérieur à 1.

11. Support de stockage stockant en son sein un programme informatique, dans lequel le programme informatique est exécuté par un processeur de manière à mettre en œuvre les étapes du procédé d'établissement de trajet selon l'une quelconque des revendications 1 à 4, les étapes du procédé d'établissement de trajet selon l'une quelconque des revendications 5 à 7.
